# EUROPEAN PATENT APPLICATION

(11) **EP 4 424 156 A1**
(43) Date of publication of application: **04.09.2024**
(21) Application number: 22886735.4
(22) Date of filing: 14.10.2022
(51) Int. Cl.: A01K 89/01

(54) **SPOOL FOR ANGLING-USE SPINNING REEL**

(30) Priority: 29.10.2021 JP 2021177381
(71) Applicant: Globeride, Inc., Higashikurume-shi, Tokyo 203-8511 (JP)
(72) Inventor: MATSUDA Kazuyuki, Higashikurume-shi, Tokyo 203-8511 (JP)
(74) Representative: Boult Wade Tennant LLP
(86) International application number: PCT/JP2022/038347
(87) International publication number: WO 2023/074406

(57) **Abstract**

A sound generator can be easily attached to a spool, and is excellent in sound generation properties while realizing downsizing and weight reduction. A spool 10 of a fishing spinning reel R1 comprises a spool body 11, a thread 14a formed concentrically with an insertion hole 19, and a sound generator 20 provided separately from the spool body 11. The sound generator 20 comprises an inner peripheral wall 22 in which the thread 14a screwed into a screwed thread 22a is formed concentrically with the insertion hole 19, an outer peripheral wall 23 disposed at an interval radially outside of the inner peripheral wall 22 and in which a ratchet groove 24 for sound generation is formed concentrically with the insertion hole 19, and a bottom wall 21 connecting the inner peripheral wall 22 and the outer peripheral wall 23. A recess 25 surrounded by the inner peripheral wall 22, the outer peripheral wall 23, and the bottom wall 21 is provided.

## Description

### Technical Field

### Cross Reference

The present application claims priority based on Japanese Patent Application No. 2021-177381 (filed on October 29, 2021), the contents of which are incorporated herein by reference in their entirety.

The present invention relates to a spool of a fishing spinning reel.

### Background Art

Generally, a fishing spinning reel includes a spool shaft that moves back and forth according to a rotation operation of a handle, and a spool is attached to the spool shaft. The spool is configured to be relatively rotatable with respect to the spool shaft, and a click mechanism for notifying the relative rotation is provided in the spool shaft and the spool. The click mechanism includes a sound generation member provided on a spool shaft side and a sound generator provided on the spool side.

Conventionally, techniques disclosed in Patent Literatures 1 and 2 are known as techniques related to a sound generator provided on the spool side. In Patent Literature 1, a recess is formed inside a fishing line winding body of a spool, and a plurality of screw holes are formed in a bottom surface of the recess to fix the sound generator by screwing.

In Patent Literature 1, since the sound generator is configured as a separate member from the spool, it is not necessary to integrally form the sound generator at the time of manufacturing the spool, and it is easy to manufacture the spool.

Furthermore, in Patent Literature 2, a drag sound generation mechanism is provided around an axis of the spool shaft, and is covered with a cover member attached by screwing.

### Citation List

### Patent Literature

Patent Literature 1: JP 2004-105097 A
Patent Literature 2: JP 2006-217849 A

### Summary of Invention

### Technical Problem

However, since Patent Literature 1 has a structure in which the sound generator is attached to the spool by screwing with a plurality of screws interspersed in a circumferential direction, alignment of the sound generator with respect to the screw holes and work of tightening the plurality of screws become complicated, and improvement thereof has been desired.

Furthermore, it is necessary to increase a thickness of the recess in order to secure a screw margin, which leads to an increase in size and weight of the spool.

Patent Literature 2 has a structure in which the drag sound generation mechanism is covered with the cover member, and thus has a problem that the work of assembling the sound generator is complicated and the sound tends to be muffled.

The present invention has been made to solve such problems, and it is an object of the present invention to provide a spool of a fishing spinning reel that is easy to attach a sound generator to the spool and is excellent in sound generation properties while realizing downsizing and weight reduction.

### Solution to Problem

In order to solve the above problems, a spool of a fishing spinning reel according to the present invention comprises: a spool body comprising an insertion hole through which a spool shaft is inserted; a thread provided inside the spool body and formed concentrically with the insertion hole as viewed in an axial direction of the insertion hole; and a sound generator provided separately from the spool body. The sound generator comprises: an inner peripheral wall in which a screwed thread screwed into the thread is formed concentrically with the insertion hole; an outer peripheral wall disposed at an interval on a radially outer side of the inner peripheral wall and in which a ratchet groove for sound generation is formed concentrically with the insertion hole; and a bottom wall connecting the inner peripheral wall and the outer peripheral wall. The sound generator comprises a recess surrounded by the inner peripheral wall, the outer peripheral wall, and the bottom wall.

In the spool of a fishing spinning reel, the sound generator can be attached to the spool body by directly screwing the screwed thread of the sound generator into the thread provided inside the spool body. That is, since the attachment of the sound generator is completed only by tightening the sound generator itself in a screwing direction, complicated attachment work using a plurality of screws as in the related art is unnecessary, and the attachment of the sound generator is simple. Furthermore, since it is not necessary to secure a screw margin as in the related art, the spool body can be thinned accordingly, and the spool body can be reduced in size and weight.

Furthermore, since the nominal diameter of the screw can be increased as compared with conventional screwing using a plurality of screws interspersed in the circumferential direction, the screwing dimension in the circumferential direction is increased, and the attachment strength of the sound generator is improved.

Furthermore, since the nominal diameter of the screw can be increased, it is not necessary to secure a long screw margin. Accordingly, the spool body can be downsized in the axial direction. Furthermore, a friction plate or the like for adjusting a drag can be additionally disposed using a space in the axial direction obtained by shortening the screw margin.

Furthermore, since the sound generator comprises the recess surrounded by the inner peripheral wall, the outer peripheral wall, and the bottom wall, the sound easily resonates and the sound generation properties are excellent.

Furthermore, preferably, the spool body comprises a bearing that supports the spool shaft. In this case, it is preferable that the bearing, the sound generator, and an outer diameter portion of the spool body are disposed in order from an axial center of the insertion hole toward a radially outer side.

According to this configuration, since the bearing, the sound generator, and the outer diameter portion of the spool body are disposed side by side in a radial direction, these members are not disposed in the axial direction of the spool, and the spool can be downsized in the axial direction.

Furthermore, preferably, the sound generator is made of resin. In this case, the resin is preferably a fiber-reinforced resin containing fibers.

In this configuration, for example, since the sound generation member is made of metal, a difference in hardness can be provided between the sound generation member and the sound generator, and the sound easily resonates. Furthermore, since wear is reduced as compared with a case where the sound generator and the sound generation member are made of metal, durability is improved. Furthermore, in a case where the sound generator is formed of a fiber-reinforced resin, sound quality in a high sound range is obtained as compared with a case where the fiber-reinforced resin is not used, and the sound generation effect is improved.

Furthermore, preferably, the sound generator is detachable from the spool body by screwing the screwed thread with respect to the thread.

In this configuration, the sound generator can be selectively replaced by preparing a plurality of types of sound generators having different sound qualities. Therefore, various variations of the spool can be realized.

Furthermore, preferably, the thread is a male thread, and the screwed thread is a female thread.

With such a configuration, a space for forming the insertion hole inside the thread can be easily secured. Furthermore, it is possible to easily secure a space for disposing a member such as a bearing inside the thread.

### Advantageous Effects of Invention

According to the spool of a fishing spinning reel according to the present invention, it is easy to attach the sound generator to the spool, and excellent sound generation properties while realizing downsizing and weight reduction.

### Brief Description of Drawings

Fig. 1 is a schematic side view illustrating a fishing spinning reel employing a spool according to an embodiment of the present invention.
Fig. 2 is a partially omitted enlarged transverse sectional view illustrating a sound generator included in a spool according to the embodiment of the present invention, and a sound generation member attached to a spool shaft.
Fig. 3 is a view illustrating a sound generator included in a spool and a sound generation member attached to a spool shaft according to an embodiment of the present invention, and is an enlarged cross-sectional view taken along line III-III in Fig. 2.
Fig. 4 is an enlarged vertical sectional view illustrating a spool according to an embodiment of the present invention.
Fig. 5 is a view illustrating a spool according to an embodiment of the present invention, in which Fig. 5A is a perspective view as viewed from diagonally rear left, and Fig. 5B is an exploded perspective view as viewed from rear.

### Description of Embodiments

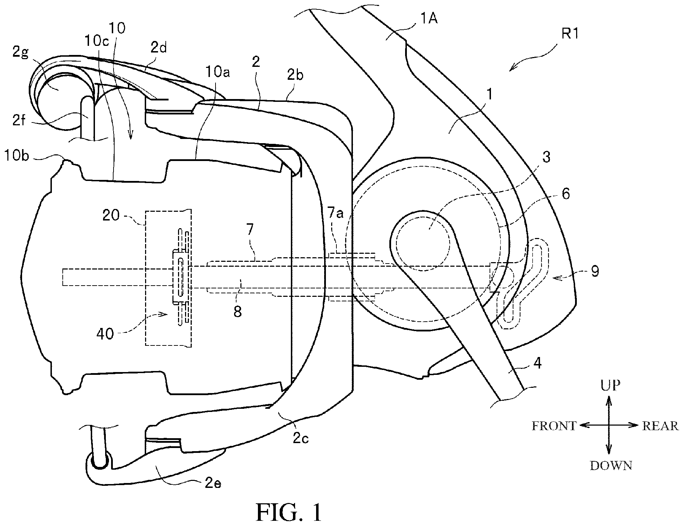

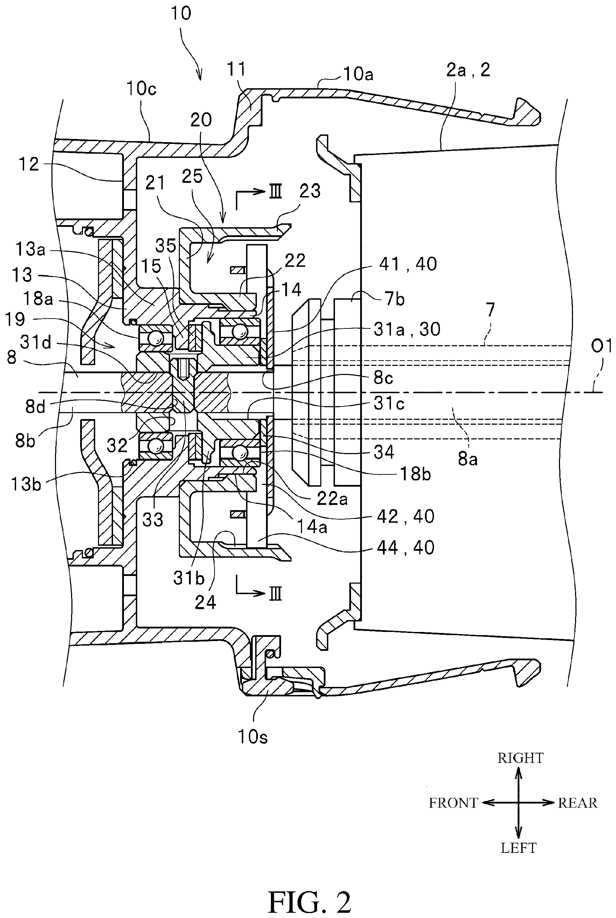

A spool of a fishing spinning reel according to an embodiment of the present invention is described below with reference to the drawing as appropriate. In the description of the embodiment, when "up/down" or "front/rear" is referred to, the direction illustrated in Fig. 1 is used as a reference. When "left/right" is referred to, the direction illustrated in Fig. 2 is used as a reference.

As illustrated in Fig. 1, principally, a fishing spinning reel R1 comprises a reel body 1 in which a leg 1A to be attached to a fishing rod (not illustrated) is formed, a rotor 2 that is rotatably provided in front of the reel body 1, and a spool 10 provided movably in a front-rear direction in synchronization with a rotational motion of the rotor 2.

A handle shaft 3 is rotatably supported on the reel body 1 via a bearing (not illustrated), and a handle 4 on which a winding-up operation is performed is attached to a protruding end of the handle shaft 3.

A shaft cylinder is rotationally stopped and fixed to the handle shaft 3. A drive gear 6 in which internal teeth for winding and driving the rotor 2 are formed is integrally formed with the shaft cylinder. The drive gear 6 meshes with a pinion gear 7a of a drive shaft cylinder 7 extending in a direction orthogonal to the handle shaft 3, and the drive shaft cylinder 7 comprises a cavity portion inside thereof that extends in an axial direction.

The drive shaft cylinder 7 is rotatably supported by the reel body 1 via a bearing, and a spool shaft 8 is inserted into the cavity portion of the drive shaft cylinder 7 so as to be movable in the axial direction. The spool shaft 8 extends in a direction orthogonal to the handle shaft 3 and the spool 10 is attached to a distal end side of the spool shaft 8.

A known oscillating mechanism 9 for moving the spool shaft 8 forward and rearward is provided at a rear end of the spool shaft 8.

The drive shaft cylinder 7 extends toward a side of the spool 10, and the rotor 2 is attached to a front end of the drive shaft cylinder 7 via a nut 7b (see Fig. 2). Note that the drive shaft cylinder 7 is restricted from rotating in a reverse rotation direction (rotating in a fishing line releasing direction) by a one-way clutch (not illustrated).

The rotor 2 comprises a cylindrical portion 2a (see Fig. 2) located in a skirt 10a of the spool 10 and a pair of arms 2b and 2c.

At front ends of the respective arms 2b and 2c, bail support members 2d and 2e are supported to be rotationally movable between a fishing line winding-up position and a fishing line releasing position, and a bail 2f that picks up a fishing line in a released state is disposed between these bail support members 2d and 2e. One proximal end of the bail 2f is attached to a line roller 2g provided integrally with the bail support member 2d, and the other proximal end is attached to the bail support member 2e.

As illustrated in Fig. 1, the spool 10 comprises a fishing line winding drum 10c around which a fishing line (not illustrated) is wound between the skirt 10a and a front flange 10b, and has a cylindrical shape. Details of the spool 10 will be described later.

In such a fishing spinning reel R1, when the handle 4 is wound up, the rotor 2 is rotationally driven via the drive gear 6 and the pinion gear 7a, and the spool 10 is moved to the front side or the rear side via the pinion gear 7a and the oscillating mechanism 9. As a result, the fishing line (not illustrated) is evenly wound around the fishing line winding drum 10c of the spool 10 via the line roller 2g.

Next, details of the spool 10 will be described. As illustrated in Figs. 2, 4, and 5, the spool 10 comprises a spool body 11 and a sound generator 20 provided separately from the spool body 11.

As illustrated in Fig. 2, the spool body 11 is attached to the spool shaft 8 via a holding member 30. The spool shaft 8 comprises a drum 8a having a circular cross section, and a distal end 8b having a roughly oval-shaped cross section. Note that in the distal end 8b, an outer peripheral surface comprises a straight portion and a curved portion. A step 8c is formed at a boundary portion between the drum 8a and the distal end 8b.

The holding member 30 is attached to the distal end 8b. At the distal end 8b, an openwork hole 8d that passes through in a direction perpendicular to the axis is formed. A latching pin 33 that latches the holding member 30 is inserted into the openwork hole 8d.

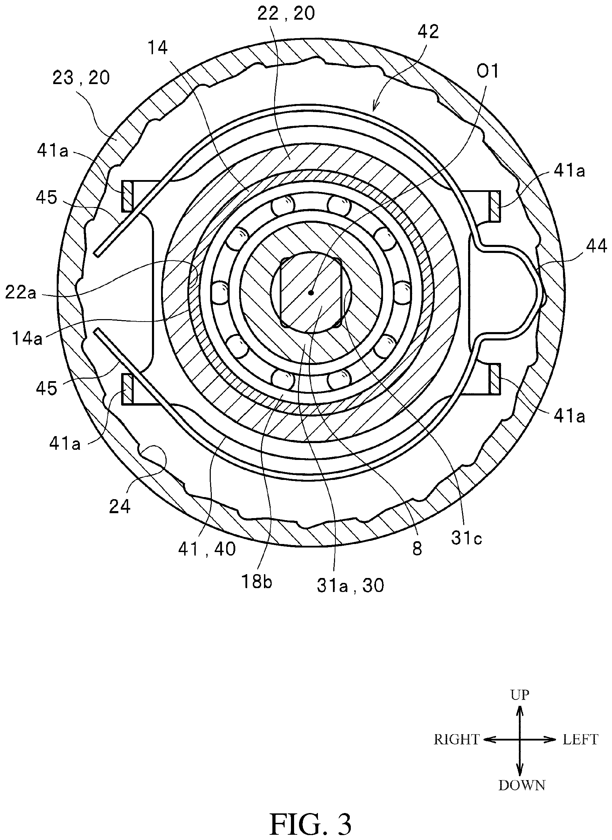

The holding member 30 has a tubular shape into which the distal end 8b of the spool shaft 8 is inserted, and comprises a base 31a and a flange 31b. The base 31a comprises a circular inner peripheral portion 31c (see Fig. 3) and an inner peripheral portion 31d (see Fig. 2). The circular inner peripheral portion 31c has an inner diameter that is mounted on the curved portion of the roughly oval cross section of the distal end 8b. The inner peripheral portion 31d is formed on a front side of the circular inner peripheral portion 31c, is mounted on both the straight portion and the curved portion of the roughly oval cross section of the distal end 8b, and has a roughly oval cross section. A through-hole 32 that the latching pin 33 is inserted into is formed in the inner peripheral portion 31d. The through-hole 32 is communicates with the openwork hole 8d of the distal end 8b of the spool shaft 8. The holding member 30 is attached so as not to be movable in the axial direction and not to be rotatable in a direction around the axis by latching the latching pin 33 to the openwork hole 8d through the through-hole 32.

A rear bearing 18b comprising a bearing is externally fitted onto an outer surface of a rear portion of the base 31a. The rear bearing 18b is held to not come off by using a washer 34 that is disposed on a rear end surface of the base 31a. A support portion 41 constituting a sound generation member 40 is sandwiched between the washer 34 and the step 8c of the spool shaft 8. The sound generation member 40 comprises the support portion 41 made of metal and a metallic click claw spring 42 supported by the support portion 41.

As illustrated in Fig. 3, the support portion 41 comprises four hook portions 41a extending on both left and right sides. The click claw spring 42 has a substantially U shape as a whole in a front view, and comprises a contact portion 44 protruding leftward. The contact portion 44 is disposed between the hook portions 41a, 41a on the left side. Furthermore, both ends 45, 45 of the click claw spring 42 are locked to the hook portions 41a, 41a on the right side.

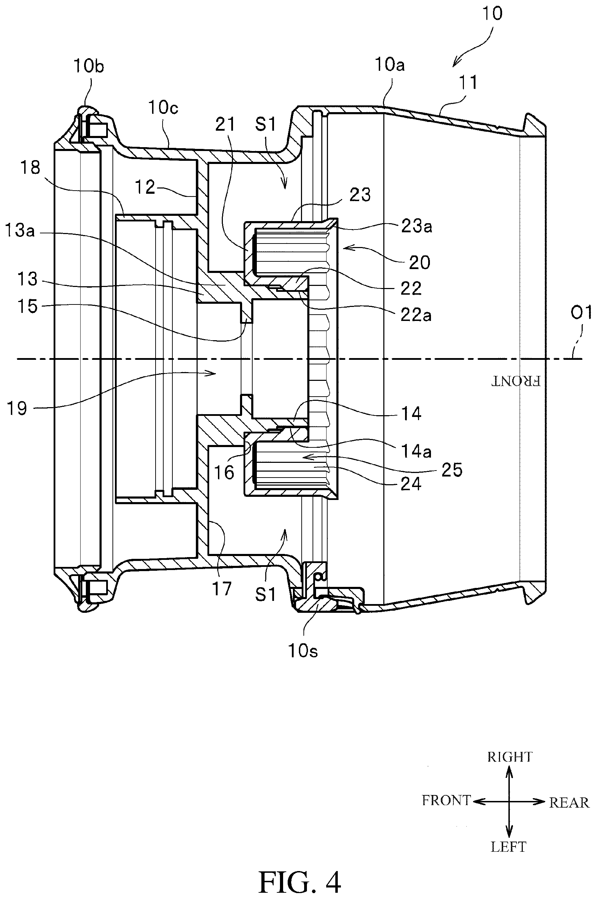

As illustrated in Fig. 2, a support wall 12 and a middle wall 13 are formed inside the spool body 11 as a structure for holding the spool body 11 by the holding member 30. The support wall 12 has a roughly disc shape, and integrally extends from an inner surface of the fishing line winding drum 10c toward an inside in a radial direction. The middle wall 13 has a cylindrical shape, and integrally extends from an extending end of the support wall 12 toward a rear side. The sound generator 20 is attached to a rear portion of the middle wall 13 by a screwing structure described later. Note that a cylindrical drag housing portion 18 (see Fig. 4) is formed on the front side of the support wall 12.

The middle wall 13 is disposed concentrically with a center axis O1 of the spool body 11, as illustrated in Fig. 4. Inside the middle wall 13, an insertion hole 19 is formed, as illustrated in Fig. 2, and part of the holding member 30 and the distal end 8b of the spool shaft 8 are inserted into the insertion hole 19.

The middle wall 13 comprises a large diameter portion 13a that is continuous to the support wall 12, and a small diameter portion 14 that is continuous to a rear side of the large diameter portion 13a, as illustrated in Fig. 2. On an outer surface of the middle wall 13, a step 16 (see Fig. 4) is formed at a boundary portion between the large diameter portion 13a and the small diameter portion 14.

On an inner peripheral surface of the large diameter portion 13a, a ring-shaped partition wall 15 that partitions the inner peripheral surface of the large diameter portion 13a forward and rearward is formed to protrude. On a front side of the partition wall 15, a front bearing 18a comprising a bearing is internally fitted onto the inner peripheral surface of the large diameter portion 13a. The front bearing 18a is held to not come off by using a coming-off prevention member 13b and the partition wall 15, and the coming-off prevention member 13b is latched onto the inner peripheral surface of the large diameter portion 13a. An inner ring of the front bearing 18a is mounted on a front outer peripheral surface of the base 31a of the holding member 30. Furthermore, the rear surface of the partition wall 15 is in contact with a front surface of the flange 31b of the holding member 30 via two washers 35.

The front bearing 18a and the rear bearing 18b are disposed side by side in the front-rear direction between the holding member 30 and the middle wall 13. As a result, the spool body 11 is stably held at the distal end 8b of the spool shaft 8 by the two front and rear bearings 18a and 18b.

As illustrated in Figs. 2 and 4, the small diameter portion 14 is a portion to which the sound generator 20 is attached. On an outer peripheral surface of a rear portion of the small diameter portion 14, a male thread 14a is formed, and the male thread 14a functions as a thread of a screwing structure. The male thread 14a is formed concentrically with the insertion hole 19, when viewed from the axial direction of the insertion hole 19. In other words, the male thread 14a is disposed on a concentric circle of a circle having the center axis O1 of the spool as a center.

On the other hand, an outer ring of the rear bearing 18b fitted onto a side of the holding member 30 is attached to the inner peripheral surface of the rear portion of the small diameter portion 14.

The sound generator 20 is a member attached to the middle wall 13 of the spool body 11 by the screwing structure, and has a cylindrical shape. The entirety of the sound generator 20 is formed by using resin, for example, fiber-reinforced resin comprising carbon fiber, glass fiber, or the like. That is, a hardness difference is given to the click claw spring 42 as the sound generation member.

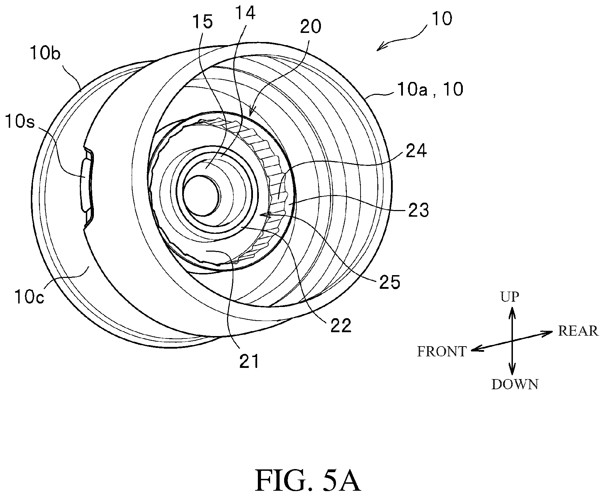

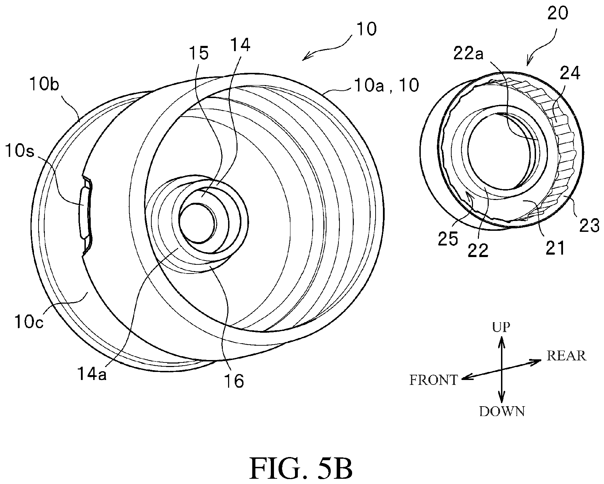

The sound generator 20 comprising a bottom wall 21 having a ring shape, an inner peripheral wall 22 that extends from a portion on an inside in the radial direction of the bottom wall 21 to a rear side, and an outer peripheral wall 23 that is disposed to be spaced on an outside in the radial direction of the inner peripheral wall 22, and extends from a portion on an outside in the radial direction of the bottom wall 21 to the rear side, as illustrated in Figs. 2 and 4. The sound generator 20 comprises a recess (an annular recessed space) 25 that is surrounded by the bottom wall 21, the inner peripheral wall 22, and the outer peripheral wall 23. As illustrated in Figs. 4, and 5(a) and 5(b), the recess 25 is annularly opened toward the rear.

As illustrated in Figs. 2, 4, and 5(b), a female thread 22a functioning as a screwed thread of the screwing structure is formed on the entire inner peripheral surface of the inner peripheral wall 22. The female thread 22a can be screwed into the male thread 14a of the middle wall 13 (See Figs. 2 and 4).

A ratchet groove 24 is formed on an inner peripheral surface of the outer peripheral wall 23. The contact portion 44 of the click claw spring 42 elastically abuts the ratchet groove 24.

As illustrated in Figs. 2 and 4, a rear end of the outer peripheral wall 23 protrudes rearward from a rear end of the inner peripheral wall 22, and is disposed in a region inside the skirt 10a using a space formed between the outer peripheral wall 23 and the cylindrical portion 2a of the rotor 2 on a rear side. Therefore, a region of the recess 25 that is surrounded by the outer peripheral wall 23 is expanded toward the rear side. This contributes to improvement of the sound generation effect. Furthermore, the rear end of the outer peripheral wall 23 is expanded in a tapered shape, and functions as a guide portion of the click claw spring 42 at the time of assembly.

As illustrated in Fig. 4, a gap S1 is formed between the fishing line winding drum 10c and the skirt 10a (a line stopper 10s) of the spool body 11 on a radially outer side of the outer peripheral wall 23. The gap S1 functions as a finger insertion portion at a time when the sound generator 20 is attached to or detached from the spool body 11. Furthermore, the gap S1 makes the sound of the sound generator 20 easier to resonate.

When the sound generator 20 is attached to the spool body 11, the sound generator 20 is inserted into the skirt 10a from a rear side of the spool body 11, the inner peripheral wall 22 of the sound generator 20 is aligned with the small diameter portion 14 of the middle wall 13 of the spool body 11, and the sound generator 20 is rotated in a screwing direction. As a result of this, the female thread 22a is screwed into the male thread 14a, and the sound generator 20 is attached to the spool body 11 (the middle wall 13). Screwing causes the bottom wall 21 of the sound generator 20 to abut onto the step 16 of the middle wall 13, and this abutting causes the sound generator 20 to be pressed against and fixed to the middle wall 13. Since the bottom wall 21 of the sound generator 20 comes into contact with the step 16, it is possible to prevent damage due to excessive fastening of the sound generator 20. Note that the sound generator 20 can be removed from the spool body 11 by releasing the screwing after the attachment (see Figs. 5(a) and 5(b)).

In a state where the sound generator 20 is attached to the spool body 11, as illustrated in Fig. 2, the rear bearing 18b, the sound generator 20, and an outer diameter portion of the spool body 11 (the fishing line winding drum 10c and the skirt 10a) are disposed in order from an axial center of the insertion hole 19 (the central axis O1 of the spool body 11) toward a radially outer side.

Note that, since the male thread 14a is disposed concentrically with the insertion hole 19 as viewed in the axial direction of the insertion hole 19, the female thread 22a screwed into the male thread is also disposed concentrically with the insertion hole 19.

According to the present embodiment described above, the screwed thread 22a of the sound generator 20 is directly screwed into the male thread 14a provided inside the spool body 11, whereby the sound generator 20 can be attached to the spool body 11. That is, since the attachment of the sound generator 20 is completed only by tightening the sound generator 20 in the screwing direction, complicated attachment work using a plurality of screws as in the related art is unnecessary, and the attachment of the sound generator 20 is simple. Furthermore, since it is not necessary to secure a screw margin as in the related art, the spool body 11 can be thinned accordingly, and the spool body 11 can be reduced in size and weight.

Furthermore, since the nominal diameter of the screw can be increased as compared with conventional screwing using a plurality of screws interspersed in the circumferential direction, the screwing dimension in the circumferential direction is increased, and the attachment strength of the sound generator 20 is improved.

Furthermore, since the nominal diameter of the screw can be increased, it is not necessary to secure a long screw margin. Accordingly, the spool body 11 can be downsized in the axial direction. Furthermore, a friction plate or the like for adjusting a drag can be additionally disposed using a space in the axial direction obtained by shortening the screw margin.

Furthermore, since the sound generator 20 comprises the recess 25 surrounded by the inner peripheral wall 22, the outer peripheral wall 23, and the bottom wall 21, sound easily resonates and sound generation properties are excellent.

Furthermore, the spool 10 has a layout in which the rear bearing 18b, the sound generator 20, and the outer diameter portion of the spool body 11 are aligned in the radial direction from the axial center of the insertion hole 19 (the central axis O1 of the spool body 11) toward a radially outer side. Therefore, the spool 10 can be downsized in the axial direction.

Furthermore, since the sound generator 20 is formed of resin and the sound generation member 40 (click claw spring 42) is made of metal, it is possible to provide a difference in hardness between the sound generator and the sound generation member, and the sound easily resonates. Furthermore, since wear is reduced as compared with a case where the sound generator 20 and the sound generation member 40 (click claw spring 42) are made of metal, durability is improved. Furthermore, in a case where the sound generator 20 is formed of a fiber-reinforced resin such as carbon fiber or glass fiber, sound quality in a high sound range is obtained as compared with a case where the fiber-reinforced resin is not used, and the sound generation effect is improved.

Furthermore, since the sound generator 20 is detachable from the spool body 11 by screwing the female thread 22a with respect to the male thread 14a, the sound generator 20 can be selectively replaced by preparing a plurality of types of sound generators 20 having different sound qualities. Therefore, various variations of the spool 10 can be realized.

Furthermore, since the thread is the male thread 14a and the screwed thread is the female thread 22a, a space for forming the insertion hole 19 inside the male thread 14a (small diameter portion 14) can be easily secured. Furthermore, it is possible to easily secure a space for disposing the rear bearing 18b and other members inside the male thread 14a (small diameter portion 14).

Although the embodiment of the present invention has been described above, the present invention is not limited to the above embodiment, and can be appropriately changed without departing from the gist of the present invention.

For example, the sound generation member 40 comprises the metallic click claw spring 42, but is not limited thereto, and for example, a contact member attached to a tip of the spring may be configured to protrude and retract with respect to the ratchet groove 24 of the sound generator 20 by using a resilient force of the spring. In this configuration, since the contact member abuts on the ratchet groove 24 so as to be orthogonal to the ratchet groove, a sharp abutting sound can be obtained. Therefore, the sound generation effect is improved.

Furthermore, in the above embodiment, the male thread 14a is provided in the small diameter portion 14 of the middle wall 13, and the female thread 22a is provided in the inner peripheral wall 22 of the sound generator 20, but the present invention is not limited thereto, and the female thread may be provided in the small diameter portion 14 of the middle wall 13, and the male thread may be provided in the inner peripheral wall 22 of the sound generator 20.

Furthermore, in the above embodiment, the male thread 14a is provided in the small diameter portion 14 of the middle wall 13, but the male thread may be provided on the outer peripheral surface of the large diameter portion 13a of the middle wall 13, and the female thread to be screwed into the male thread may be provided on the inner peripheral wall 22 of the sound generator 20.

Furthermore, the ratchet groove 24 of the sound generator 20 and the click claw spring 42 may have various forms and shapes.

### Reference Signs List

- 8: Spool shaft
- 10: Spool
- 11: Spool body
- 14a: Male thread (thread)
- 18a: Front bearing (bearing)
- 18b: Rear bearing (bearing)
- 19: Insertion hole
- 20: Sound generator
- 21: Bottom wall
- 22: Inner peripheral wall
- 22a: Female thread (screwed thread)
- 23: Outer peripheral wall
- 25: Recess
- R1: Fishing spinning reel

## Claims

1. A spool of a fishing spinning reel, the spool comprising:
a spool body comprising an insertion hole through which a spool shaft is inserted;
a thread provided inside the spool body and formed concentrically with the insertion hole as viewed in an axial direction of the insertion hole; and
a sound generator provided separately from the spool body,
wherein the sound generator comprises:
an inner peripheral wall in which a screwed thread screwed into the thread is formed concentrically with the insertion hole;
an outer peripheral wall disposed at an interval on a radially outer side of the inner peripheral wall and in which a ratchet groove for sound generation is formed concentrically with the insertion hole;
a bottom wall connecting the inner peripheral wall and the outer peripheral wall; and
a recess surrounded by the inner peripheral wall, the outer peripheral wall, and the bottom wall.

2. The spool of a fishing spinning reel according to claim 1, wherein
the spool body comprises a bearing that supports the spool shaft, and
in order from a central axis of the insertion hole toward a radially outer side,
the bearing, the sound generator, and an outer diameter portion of the spool body are disposed.

3. The spool of a fishing spinning reel according to claim 1 or 2, wherein the sound generator is formed of resin.

4. The spool of a fishing spinning reel according to claim 3, wherein the resin is a fiber-reinforced resin containing fibers.

5. The spool of a fishing spinning reel according to any one of claims 1 to 4, wherein the sound generator is detachable from the spool body by screwing the screwed thread with respect to the thread.

6. The spool of a fishing spinning reel according to any one of claims 1 to 5, wherein the thread is a male thread, and the screwed thread is a female thread.
